# EUROPEAN PATENT APPLICATION

(11) **EP 4 456 166 A1**
(43) Date of publication of application: **30.10.2024**
(21) Application number: 22910836.0
(22) Date of filing: 02.12.2022
(51) Int. Cl.: H01M 4/13, H01M 4/139, H01M 4/62, H01M 10/0562

(54) **BINDER COMPOSITION FOR ALL-SOLID-STATE SECONDARY BATTERY, SLURRY COMPOSITION FOR ALL-SOLID-STATE SECONDARY BATTERY, FUNCTIONAL LAYER FOR ALL-SOLID-STATE SECONDARY BATTERY, AND ALL-SOLID-STATE SECONDARY BATTERY**

(30) Priority: 22.12.2021 JP 2021208617
(71) Applicant: Zeon Corporation, Tokyo 100-8246 (JP)
(72) Inventor: MATSUO Yusaku, Tokyo 100-8246 (JP)
(74) Representative: Maiwald GmbH
(86) International application number: PCT/JP2022/044616
(87) International publication number: WO 2023/120120

(57) **Abstract**

Provided is a binder composition that is capable of producing a functional layer having excellent adhesiveness and an all-solid-state secondary battery having low IV resistance. The binder composition contains a binder and an organic solvent having a carbon number of 6 or more. The binder includes a polymer X. The polymer X includes a monomer unit A that includes an aromatic hydrocarbon ring and a functional group bonded directly or indirectly to the aromatic hydrocarbon ring, wherein the functional group is a sulfo group, a carboxy group, and/or an amino group. The proportional content of the monomer unit A in the polymer X is not less than 0.5 mass% and not more than 3.0 mass%.

## Description

### TECHNICAL FIELD

The present disclosure relates to a binder composition for an all-solid-state secondary battery, a slurry composition for an all-solid-state secondary battery, a functional layer for an all-solid-state secondary battery, and an all-solid-state secondary battery.

### BACKGROUND

Demand for secondary batteries such as lithium ion secondary batteries has been increasing in recent years for various applications such as mobile information terminals, mobile electronic devices, and other mobile terminals, and also domestic small power storage devices, motorcycles, electric vehicles, and hybrid electric vehicles. This expansion of applications of secondary batteries has been accompanied by demand for further improvement of secondary battery safety.

All-solid-state secondary batteries in which solid electrolyte particles are used instead of an organic solvent electrolyte having high flammability and high risk of catching fire upon leakage are attracting interest as secondary batteries having high safety.

Production of a battery member of an all-solid-state secondary battery may be carried out using a binder composition for an all-solid-state secondary battery that contains a polymer as a binder and a solvent. Specifically, the binder composition is, for example, mixed with functional particles (electrode active material particles, solid electrolyte particles, conductive material particles, etc.) to produce a slurry composition for an all-solid-state secondary battery. Next, the solvent is removed from this slurry composition to form a functional layer (electrode mixed material layer, solid electrolyte layer, undercoat layer, etc.) in which components such as the functional particles are bound by the binder, and this functional layer can then be used as a battery member of an all-solid-state secondary battery or as part of such a battery member.

Improvements have been made to polymers used as binders and binder compositions containing such polymers with the aim of improving the performance of all-solid-state secondary batteries (for example, refer to Patent Literature (PTL) 1).

### CITATION LIST

### Patent Literature

PTL 1: WO2021/085044A1

### SUMMARY

### (Technical Problem)

It is desirable that a functional layer formed using a binder composition ensures sufficient adhesiveness and does not excessively increase IV resistance of an all-solid-state secondary battery so as to improve battery characteristics. Although the adhesiveness of a functional layer can be increased by increasing the amount of a binder that is contained in the functional layer, increasing the amount of the binder, which is a resistive component, also increases IV resistance.

Moreover, there is room for improvement of a binder composition of a conventional technique such as described above in terms of achieving a balance of even higher levels of improvement of functional layer adhesiveness and reduction of all-solid-state secondary battery IV resistance.

Accordingly, one object of the present disclosure is to provide a binder composition for an all-solid-state secondary battery and a slurry composition for an all-solid-state secondary battery that are capable of producing a functional layer having excellent adhesiveness and an all-solid-state secondary battery having low IV resistance.

Another object of the present disclosure is to provide a functional layer having excellent adhesiveness and an all-solid-state secondary battery having low IV resistance.

### (Solution to Problem)

The inventor conducted diligent investigation with the aim of solving the problem set forth above. The inventor discovered that by using a binder composition that contains a polymer X including a specific monomer unit A in a specific proportion and a specific organic solvent, it is possible to increase adhesiveness of an obtained functional layer while also suppressing IV resistance increase of an all-solid-state secondary battery, and, in this manner, completed the present disclosure.

Specifically, the present disclosure aims to advantageously solve the problem set forth above, and, according to the present disclosure, binder compositions for an all-solid-state secondary battery according to the following [1] to [4], slurry compositions for an all-solid-state secondary battery according to the following [5] and [6], a functional layer for an all-solid-state secondary battery according to the following [7], and an all-solid-state secondary battery according to the following [8] are provided.
[1] A binder composition for an all-solid-state secondary battery comprising: a binder; and an organic solvent having a carbon number of 6 or more, wherein the binder includes a polymer X, the polymer X includes a monomer unit A that includes an aromatic hydrocarbon ring and a functional group bonded directly or indirectly to the aromatic hydrocarbon ring, the functional group is one or more selected from the group consisting of a sulfo group, a carboxy group, and an amino group, and proportional content of the monomer unit A in the polymer X is not less than 0.5 mass% and not more than 3.0 mass% when all repeating units included in the polymer X are taken to be 100 mass%.

By using a binder composition that contains the above-described polymer X as a binder and an organic solvent having a carbon number of 6 or more as a solvent, it is possible to produce a functional layer having excellent adhesiveness and an all-solid-state secondary battery having low IV resistance.

The phrase "includes a monomer unit" as used in the present specification means that "a repeating unit derived from that monomer is included in a polymer obtained using the monomer".

The proportional content (mass%) of a repeating unit in a polymer referred to in the present specification can be measured by a nuclear magnetic resonance (NMR) method such as ¹H-NMR.

[2] The binder composition for an all-solid-state secondary battery according to the foregoing [1], wherein the polymer X further includes a nitrile group-containing monomer unit, and proportional content of the nitrile group-containing monomer unit in the polymer X is not less than 3.0 mass% and not more than 25.0 mass% when all repeating units included in the polymer X are taken to be 100 mass%.

When the polymer X includes a nitrile group-containing monomer unit in the above-described proportion, fluidity of a slurry composition can be increased, and IV resistance of an all-solid-state secondary battery can be further reduced.

[3] The binder composition for an all-solid-state secondary battery according to the foregoing [1] or [2], wherein the polymer X further includes a (meth)acrylic acid ester monomer unit, and proportional content of the (meth)acrylic acid ester monomer unit in the polymer X is not less than 35.0 mass% and not more than 95.0 mass% when all repeating units included in the polymer X are taken to be 100 mass%.

When the polymer X includes a (meth)acrylic acid ester monomer unit in the above-described proportion, flexibility of a functional layer can be ensured while also improving cycle characteristics of an all-solid-state secondary battery.

In the present specification, "(meth)acryl" is used to indicate "acryl" and/or "methacryl".

[4] The binder composition for an all-solid-state secondary battery according to any one of the foregoing [1] to [3], where the organic solvent having a carbon number of 6 or more includes one or more selected from the group consisting of an aromatic hydrocarbon, a ketone, an ester, and an ether.

When at least any one of the above-described organic solvents is used as a solvent, IV resistance of an all-solid-state secondary battery can be further reduced, and cycle characteristics of the all-solid-state secondary battery can also be improved. Moreover, short-circuiting of a positive electrode and a negative electrode due to deposition of a metal component can be sufficiently prevented.

[5] A slurry composition for an all-solid-state secondary battery comprising: functional particles; and the binder composition for an all-solid-state secondary battery according to any one of the foregoing [1] to [4].

By using a slurry composition that contains any one of the binder compositions set forth above, it is possible to produce a functional layer having excellent adhesiveness and an all-solid-state secondary battery having low IV resistance.

[6] The slurry composition for an all-solid-state secondary battery according to the foregoing [5], wherein the functional particles are one or more selected from the group consisting of electrode active material particles, solid electrolyte particles, and conductive material particles.

[7] A functional layer for an all-solid-state secondary battery formed using the slurry composition for an all-solid-state secondary battery according to the foregoing [5] or [6].

A functional layer that is formed using any one of the slurry compositions set forth above has excellent adhesiveness and can be used to produce an all-solid-state secondary battery having low IV resistance.

[8] An all-solid-state secondary battery comprising the functional layer for an all-solid-state secondary battery according to the foregoing [7]. An all-solid-state secondary battery that includes the functional layer set forth above has low IV resistance and excellent battery characteristics (output characteristics, cycle characteristics, etc.).

### (Advantageous Effect)

According to the present disclosure, it is possible to provide a binder composition for an all-solid-state secondary battery and a slurry composition for an all-solid-state secondary battery that are capable of producing a functional layer having excellent adhesiveness and an all-solid-state secondary battery having low IV resistance.

Moreover, according to the present disclosure, it is possible to provide a functional layer having excellent adhesiveness and an all-solid-state secondary battery having low IV resistance.

### DETAILED DESCRIPTION

The following provides a detailed description of embodiments of the present disclosure.

A presently disclosed binder composition for an all-solid-state secondary battery is used in production of an all-solid-state secondary battery. For example, the presently disclosed binder composition for an all-solid-state secondary battery can be used in formation of a functional layer for an all-solid-state secondary battery that is a constituent of a battery member of an all-solid-state secondary battery. A presently disclosed slurry composition for an all-solid-state secondary battery is a slurry composition that contains the presently disclosed binder composition for an all-solid-state secondary battery and that can be used in formation of a functional layer for an all-solid-state secondary battery. Moreover, a presently disclosed functional layer for an all-solid-state secondary battery is formed using the presently disclosed slurry composition for an all-solid-state secondary battery. Furthermore, the presently disclosed all-solid-state secondary battery includes the presently disclosed functional layer for an all-solid-state secondary battery.

The functional layer for an all-solid-state secondary battery may, for example, be a solid electrolyte layer that is disposed between a positive electrode and a negative electrode and in which solid electrolyte particles are bound by a binder; an electrode mixed material layer in which electrode active material particles, solid electrolyte particles, and optionally used conductive material particles are bound by a binder; or an undercoat layer that is disposed between an electrode mixed material layer and a current collector and in which conductive material particles and optionally used solid electrolyte particles are bound by a binder.

### (Binder composition for all-solid-state secondary battery)

The presently disclosed binder composition contains a binder and a solvent and can optionally further contain other components.

One feature of the presently disclosed binder composition is that the binder composition contains a polymer X including a monomer unit A in a proportion of not less than 0.5 mass% and not more than 3.0 mass% as the binder. The monomer unit A is a repeating unit that includes an aromatic hydrocarbon ring having one or more selected from the group consisting of a sulfo group, a carboxy group, and an amino group. Another feature of the presently disclosed binder composition is that the binder composition contains an organic solvent having a carbon number of 6 or more as the solvent.

By using a binder composition that contains the polymer X as a binder and an organic solvent having a carbon number of 6 or more as a solvent in this manner, it is possible to increase adhesiveness of an obtained functional layer while also producing an all-solid-state secondary battery having low IV resistance.

Although it is not clear why a balance of high levels of improvement of functional layer adhesiveness and reduction of all-solid-state secondary battery IV resistance can be achieved by using the presently disclosed binder composition, the reason for this is presumed to be as follows.

Firstly, the presently disclosed binder composition contains an organic solvent having a carbon number of 6 or more as a solvent. This makes it possible to improve the fluidity of a slurry composition that is produced using the binder composition, presumably due to aggregation of a binder, solid electrolyte particles, and so forth in the slurry composition being inhibited. In addition, an organic solvent having a carbon number of 6 or more has a low tendency to undergo a side reaction with solid electrolyte particles and has excellent handleability due to the high boiling point thereof. Therefore, by using an organic solvent having a carbon number of 6 or more as the solvent, it is possible to form a functional layer that has bound components such as solid electrolyte particles disposed uniformly therein and that has excellent electrical conductivity.

On the other hand, studies conducted by the inventor have revealed that the binding capacity of a polymer used as a binder may decrease when using a slurry composition that contains an organic solvent having a carbon number of 6 or more. The reason for this reduction of binding capacity is not clear, but is presumed to be due to a functional group that can cause the polymer to display binding capacity becoming covered and buried by a main chain of the polymer in the organic solvent having a carbon number of 6 or more, which has low polarity.

In response thereto, the monomer unit A that is included in the polymer X used in the presently disclosed binder composition has at least one functional group among a sulfo group, a carboxy group, and an amino group bonded to an aromatic hydrocarbon ring. The aromatic hydrocarbon ring has excellent affinity with the organic solvent having a carbon number of 6 or more, and this is thought to allow the functional group that is bonded to the aromatic hydrocarbon ring to sufficiently display binding capacity thereof without becoming buried by a main chain in the organic solvent.

On the other hand, studies conducted by the inventor have revealed that IV resistance of an all-solid-state secondary battery increases in a situation in which the proportional content of the monomer unit A in the polymer X is excessively high, presumably due to the monomer unit A trapping charge carriers such as lithium ions. Since the proportional content of the monomer unit A in the polymer X is not less than 0.5 mass% and not more than 3.0 mass% in the presently disclosed binder composition, the use of the polymer X as a binder is thought to enable a balance of high levels of improvement of functional layer adhesiveness and reduction of all-solid-state secondary battery IV resistance.

### <Binder>

In a functional layer that is formed from a slurry composition produced using the binder composition, the binder can bind components such as functional particles to one another so as to form the functional layer while also imparting adhesiveness to the functional layer.

The presently disclosed binder composition contains at least the polymer X as the binder and may optionally contain polymers other than the polymer X (i.e., other polymers) as the binder. Polymers that are known as binders can be used as other polymers without any specific limitations.

### «Polymer X»

The polymer X includes a monomer unit A. No specific limitations are placed on repeating units other than the monomer unit A that are included in the polymer X, and examples thereof include a nitrile group-containing monomer unit, a (meth)acrylic acid ester monomer unit, and other repeating units (repeating units that do not correspond to any of the monomer unit A, the nitrile group-containing monomer unit, and the (meth)acrylic acid ester monomer unit).

### [Monomer unit A]

The monomer unit A includes an aromatic hydrocarbon ring and at least one functional group among a sulfo group, a carboxy group, and an amino group that is bonded directly or indirectly to the aromatic hydrocarbon ring. Note that the monomer unit A may include just one aromatic hydrocarbon ring or may include two or more aromatic hydrocarbon rings that are of the same type or different types. Also note that just one of the aforementioned functional groups may be present as a substituent on one aromatic hydrocarbon ring or two or more of the aforementioned functional groups that are of the same type or different types may be present as substituents on one aromatic hydrocarbon ring.

Although no specific limitations are placed on the aromatic hydrocarbon ring that is included in the monomer unit A, the aromatic hydrocarbon ring is, for example, preferably a benzene ring, a naphthalene ring, or an anthracene ring from a viewpoint of further improving adhesiveness of a functional layer, and is more preferably a benzene ring.

Moreover, the functional group that is bonded to the above-described aromatic hydrocarbon ring is more preferably a sulfo group or an amino group from a viewpoint of further improving adhesiveness of a functional layer while also enhancing cycle characteristics of an all-solid-state secondary battery. Note that the functional group may be bonded directly to a carbon atom of the aromatic hydrocarbon ring or may be bonded indirectly via a linking group such as a methylene group or an ethylene group. However, from a viewpoint of further improving adhesiveness of a functional layer, it is preferable that the functional group is bonded directly to a carbon atom of the aromatic hydrocarbon ring. Also note that the functional group may be in the form of a salt. For example, the sulfo group (-SO₃H) may be in the form of a sulfonate group such as a sodium sulfonate group (-SO₃Na) or a lithium sulfonate group (-SO₃Li).

A monomer a that can form the monomer unit A has a structure corresponding to the monomer unit A. In other words, the monomer a includes a polymerizable structure such as an ethylenically unsaturated bond and also includes an aromatic hydrocarbon ring and at least one among a sulfo group, a carboxy group, and an amino group that is bonded directly or indirectly to the aromatic hydrocarbon ring.

In terms of specific examples of the monomer a, p-styrene sulfonic acid, 4-vinylbenzoic acid, and 3-vinylaniline, for example, are preferable from a viewpoint of further improving adhesiveness of a functional layer while also enhancing cycle characteristics of an all-solid-state secondary battery, and p-styrene sulfonic acid and 3-vinylaniline are more preferable. In other words, a p-styrene sulfonic acid unit, a 4-vinylbenzoic acid unit, and a 3-vinylaniline unit are preferable as the monomer unit A, and a p-styrene sulfonic acid unit and a 3-vinylaniline unit are more preferable as the monomer unit A.

Note that the polymer X may include just one type of monomer unit A or may include two or more types of monomer units A. In other words, one monomer a that can form the monomer unit A may be used individually, or two or more monomers a that can form the monomer unit A may be used in combination.

The proportional content of the monomer unit A in the polymer X when all repeating units included in the polymer X are taken to be 100 mass% is required to be not less than 0.5 mass% and not more than 3.0 mass%, is preferably 1.0 mass% or more, and more preferably 1.5 mass% or more, and is preferably 2.8 mass% or less, more preferably 2.6 mass% or less, and even more preferably 2.5 mass% or less. In a situation in which the proportion constituted by the monomer unit A among all repeating units of the polymer X is less than 0.5 mass%, adhesiveness of a functional layer and cycle characteristics of an all-solid-state secondary battery deteriorate. On the other hand, in a situation in which the proportion constituted by the monomer unit A among all repeating units of the polymer X is more than 3.0 mass%, IV resistance of an all-solid-state secondary battery increases.

### [Nitrile group-containing monomer unit]

Examples of nitrile group-containing monomers that can form the nitrile group-containing monomer unit include α,β-ethylenically unsaturated nitrile monomers. Specifically, any α,β-ethylenically unsaturated compound that has a nitrile group can be used as an α,β-ethylenically unsaturated nitrile monomer without any specific limitations. Examples include acrylonitrile; α-halogenoacrylonitriles such as α-chloroacrylonitrile and α-bromoacrylonitrile; and α-alkylacrylonitriles such as methacrylonitrile and α-ethylacrylonitrile. Of these nitrile group-containing monomers, acrylonitrile is preferable from a viewpoint of improving fluidity of a slurry composition. In other words, an acrylonitrile unit is preferable as the nitrile group-containing monomer unit.

Note that the polymer X may include just one type of nitrile group-containing monomer unit or may include two or more types of nitrile group-containing monomer units. In other words, one nitrile group-containing monomer that can form the nitrile group-containing monomer unit may be used individually, or two or more nitrile group-containing monomers that can form the nitrile group-containing monomer unit may be used in combination.

The proportional content of the nitrile group-containing monomer unit in the polymer X when all repeating units included in the polymer X are taken to be 100 mass% is preferably 3.0 mass% or more, more preferably 3.5 mass% or more, and even more preferably 5.0 mass% or more, and is preferably 25.0 mass% or less, more preferably 20.0 mass% or less, even more preferably 15.0 mass% or less, and particularly preferably 12.0 mass% or less. When the proportional content of the nitrile group-containing monomer unit among all repeating units of the polymer X is 3.0 mass% or more, dispersibility of functional particles (particularly solid electrolyte particles) in a slurry composition produced using the binder composition improves. On the other hand, when the proportional content of the nitrile group-containing monomer unit among all repeating units of the polymer X is 25.0 mass% or less, solubility of the polymer X in the organic solvent having a carbon number of 6 or more improves. Accordingly, fluidity of a slurry composition can be increased and cycle characteristics of an all-solid-state secondary battery can be improved through the proportional content of the nitrile group-containing monomer unit among all repeating units of the polymer X being within any of the ranges set forth above.

### [(Meth)acrylic acid ester monomer unit]

Examples of (meth)acrylic acid ester monomers that can form the (meth)acrylic acid ester monomer unit include (meth)acrylic acid alkyl esters such as methyl (meth)acrylate, ethyl (meth)acrylate, n-propyl (meth)acrylate, isopropyl (meth)acrylate, n-butyl (meth)acrylate, t-butyl (meth)acrylate, isobutyl (meth)acrylate, n-pentyl (meth)acrylate, isopentyl (meth)acrylate, hexyl (meth)acrylate, heptyl (meth)acrylate, octyl (meth)acrylate, 2-ethylhexyl (meth)acrylate, nonyl (meth)acrylate, decyl (meth)acrylate, lauryl (meth)acrylate, n-tetradecyl (meth)acrylate, and stearyl (meth)acrylate. Of these (meth)acrylic acid ester monomers, ethyl acrylate, n-butyl acrylate, and 2-ethylhexyl acrylate are preferable from a viewpoint of improving flexibility of a functional layer and cycle characteristics of an all-solid-state secondary battery. In other words, an ethyl acrylate unit, an n-butyl acrylate unit, and a 2-ethylhexyl acrylate unit are preferable as the (meth)acrylic acid ester monomer unit.

Note that the polymer X may include just one type of (meth)acrylic acid ester monomer unit or may include two or more types of (meth)acrylic acid ester monomer units. In other words, one (meth)acrylic acid ester monomer that can form the (meth)acrylic acid ester monomer unit may be used individually, or two or more (meth)acrylic acid ester monomers that can form the (meth)acrylic acid ester monomer unit may be used in combination.

In the present specification, "(meth)acrylate" is used to indicate "acrylate" and/or "methacrylate".

The proportional content of the (meth)acrylic acid ester monomer unit in the polymer X when all repeating units included in the polymer X are taken to be 100 mass% is preferably 35.0 mass% or more, more preferably 50.0 mass% or more, even more preferably 60.0 mass% or more, and particularly preferably 65.0 mass% or more, and is preferably 95.0 mass% or less, more preferably 94.0 mass% or less, and even more preferably 93.0 mass% or less. When the proportional content of the (meth)acrylic acid ester monomer unit among all repeating units of the polymer X is 35.0 mass% or more, flexibility of a functional layer can be improved. On the other hand, when the proportional content of the (meth)acrylic acid ester monomer unit among all repeating units of the polymer X is 95.0 mass% or less, cycle characteristics of an all-solid-state secondary battery can be enhanced.

### [Other repeating units]

No specific limitations are placed on other repeating units that can be included in the polymer X so long as they are monomer units derived from monomers that are copolymerizable with the previously described monomer a. Examples of such monomer units include aromatic vinyl monomer units (excluding those corresponding to the monomer unit A) such as a styrene unit; conjugated diene monomer units such as a 1,3-butadiene unit and an isoprene unit; cross-linkable monomer units such as an allyl (meth)acrylate unit, an ethylene glycol di(meth)acrylate unit, and a diethylene glycol di(meth)acrylate unit; and acidic group-containing monomer units (excluding those corresponding to the monomer unit A) such as acrylic acid unit, methacrylic acid unit, and 2-acrylamido-2-methylpropane sulfonic acid unit. Note that the polymer X may include just one type of other repeating unit or may include two or more types of other repeating units.

### [Production method]

The polymer X can be produced by polymerizing a monomer composition that contains the monomers described above.

The proportional content of each monomer in the monomer composition can be set in accordance with the proportional content of each monomer unit (each repeating unit) in the polymer X.

Although the polymerization method is not specifically limited, a method such as solution polymerization, suspension polymerization, bulk polymerization, or emulsion polymerization may be used. Note that a known emulsifier and/or polymerization initiator can be used as necessary in each of these polymerization methods.

### [Weight-average molecular weight]

The weight-average molecular weight of the polymer X is preferably 10,000 or more, more preferably 100,000 or more, and even more preferably 800,000 or more, and is preferably 3,000,000 or less, more preferably 2,500,000 or less, and even more preferably 2,000,000 or less. When the weight-average molecular weight of the polymer X is 10,000 or more, adhesiveness of a functional layer can be increased while also improving cycle characteristics of an all-solid-state secondary battery. On the other hand, when the weight-average molecular weight of the polymer X is 3,000,000 or less, fluidity of a slurry composition can be increased.

Note that the "weight-average molecular weight" and "number-average molecular weight" of the polymer X can be measured by a method described in the EXAMPLES section.

The molecular weight distribution (ratio of weight-average molecular weight relative to number-average molecular weight) of the polymer X is preferably 1.5 or more, more preferably 2.0 or more, and even more preferably 2.5 or more, and is preferably 5.5 or less, more preferably 5.0 or less, and even more preferably 4.5 or less. When the molecular weight distribution of the polymer X is within any of the ranges set forth above, fluidity of a slurry composition can be increased while also further improving adhesiveness of a functional layer.

### <Solvent>

The presently disclosed binder composition contains an organic solvent having a carbon number of 6 or more as a solvent. Although the presently disclosed binder composition may contain an organic solvent having a carbon number of less than 6 and/or water, the proportion constituted by the organic solvent having a carbon number of 6 or more among the solvent of the presently disclosed binder composition when the entire solvent is taken to be 100 mass% is preferably 80 mass% or more, more preferably 90 mass% or more, even more preferably 95 mass% or more, particularly preferably 99 mass% or more, and most preferably 100 mass% (i.e., a solvent other than the organic solvent having a carbon number of 6 or more is not included) from a viewpoint of ensuring fluidity of a slurry composition while also further improving adhesiveness of a functional layer.

Note that one solvent may be used individually, or two or more solvents may be used in combination.

### <<Organic solvent having carbon number of 6 or more>>

From a viewpoint of further reducing IV resistance of an all-solid-state secondary battery while also improving cycle characteristics and sufficiently preventing short-circuiting of a positive electrode and a negative electrode due to deposition of a metal component, the organic solvent having a carbon number of 6 or more is preferably an aromatic hydrocarbon such as toluene (carbon number: 7) or xylene (carbon number: 8); a ketone such as cyclohexanone (carbon number: 6) or diisobutyl ketone (carbon number: 9); an ester such as butyl acetate (carbon number: 6), butyl butyrate (carbon number: 8), isobutyl isobutyrate (carbon number: 8), hexyl butyrate (carbon number: 10), or ε-caprolactone (carbon number: 6); or an ether such as ethylene glycol diethyl ether (carbon number: 6), n-butyl ether (carbon number: 8), or anisole (carbon number: 7), for example. Of these organic solvents, organic solvents having a carbon number of 8 or more are preferable from a viewpoint of enhancing adhesiveness of a functional layer and cycle characteristics of an all-solid-state secondary battery while also even further reducing IV resistance of the all-solid-state secondary battery, butyl butyrate, xylene, isobutyl isobutyrate, and diisobutyl ketone are more preferable, and butyl butyrate, isobutyl isobutyrate, and diisobutyl ketone are even more preferable.

The upper limit for the carbon number of the organic solvent having a carbon number of 6 or more is not specifically limited and can be set as 12 or less, for example.

### <Other components>

Examples of other components that the binder composition can optionally contain include, but are not specifically limited to, dispersants, leveling agents, defoamers, and reinforcing materials. These other components are not specifically limited so long as they do not affect battery reactions. Moreover, one of these components may be used individually, or two or more of these components may be used in combination.

### <Production method of binder composition>

No specific limitations are placed on the method by which the presently disclosed binder composition is produced. For example, the binder composition can be produced by using the organic solvent having a carbon number of 6 or more to perform solvent exchange with respect to a water dispersion of the polymer X that has been obtained through a polymerization reaction in water, and also performing addition of other components, etc., as necessary.

### (Slurry composition for all-solid-state secondary battery)

The presently disclosed slurry composition contains functional particles and the presently disclosed binder composition set forth above. In other words, the presently disclosed slurry composition contains functional particles, a binder that includes the above-described polymer X, and a solvent that includes the above-described organic solvent having a carbon number of 6 or more and may optionally contain other components. As a result of the presently disclosed slurry composition containing the presently disclosed binder composition, adhesiveness of an obtained functional layer can be increased while also producing an all-solid-state secondary battery having low IV resistance through the slurry composition.

### <Functional particles>

The functional particles that are contained in the slurry composition can be selected as appropriate depending on the application of the slurry composition (type of functional layer that is to be produced using the slurry composition), for example.

Electrode active material particles, solid electrolyte particles, and conductive material particles are preferable as the functional particles.

### «Electrode active material particles»

Electrode active material particles contained in the presently disclosed slurry composition (slurry composition for an electrode mixed material layer) are particles formed of a material (electrode active material) that gives and receives electrons in an electrode of an all-solid-state secondary battery. Moreover, in a case in which the all-solid-state secondary battery is an all-solid-state lithium ion secondary battery, for example, particles formed of a material that can occlude and release lithium are normally used as the electrode active material particles. One type of electrode active material particles may be used individually, or two or more types of electrode active material particles may be used in combination.

Although the following describes, as one example, a case in which the slurry composition for an all-solid-state secondary battery is a slurry composition for an all-solid-state lithium ion secondary battery, the presently disclosed slurry composition for an all-solid-state secondary battery is not limited to the following example.

In the case of a positive electrode active material forming positive electrode active material particles for an all-solid-state lithium ion secondary battery, the positive electrode active material may be an inorganic compound or an organic compound without any specific limitations. Note that the positive electrode active material may alternatively be a mixture of an inorganic compound and an organic compound.

Examples of inorganic compounds that may be used in the positive electrode active material include transition metal oxides, complex oxides of lithium and transition metals (lithium-containing complex metal oxides), and transition metal sulfides. The aforementioned transition metal may be Fe, Co, Ni, Mn, or the like. Specific examples of inorganic compounds that may be used in the positive electrode active material include lithium-containing complex metal oxides such as LiCoO₂ (lithium cobalt oxide), LiNiO₂, LiMnO₂, LiMn₂O₄, LiFePO₄, and LiFeVO₄; transition metal sulfides such as TiS₂, TiS₃, and amorphous MoSz; and transition metal oxides such as Cu₂V₂O₃, amorphous V₂O-P₂O₅, MoO₃, V₂O₅, and V₆O₁₃. These compounds may have undergone partial element substitution.

The inorganic compounds described above can be used individually or as a mixture of two or more types.

Examples of organic compounds that may be used in the positive electrode active material include polyaniline, polypyrrole, polyacenes, disulfide compounds, polysulfide compounds, and N-fluoropyridinium salts.

The organic compounds described above can be used individually or as a mixture of two or more types.

In the case of a negative electrode active material forming negative electrode active material particles for an all-solid-state lithium ion secondary battery, the negative electrode active material may be an allotrope of carbon such as graphite or coke. Note that a negative electrode active material formed of an allotrope of carbon can be used in a mixed or coated form with a metal, metal salt, oxide, or the like. Examples of negative electrode active materials that can be used also include oxides and sulfates of silicon, tin, zinc, manganese, iron, nickel, and the like; lithium metal; lithium alloys such as Li-Al, Li-Bi-Cd, and Li-Sn-Cd; lithium transition metal nitrides; and silicone.

The negative electrode active materials described above can be used individually or as a mixture of two or more types.

The particle diameter of the electrode active material particles (positive electrode active material particles or negative electrode active material particles) can be the same as that of conventionally used electrode active material particles without any specific limitations.

### <Solid electrolyte particles>

Solid electrolyte particles contained in the presently disclosed slurry composition are particles formed of a material that conducts ions in a functional layer of an all-solid-state secondary battery. A solid electrolyte forming the solid electrolyte particles may be an inorganic solid electrolyte or an organic solid electrolyte, and is preferably an inorganic solid electrolyte. One type of solid electrolyte particles may be used individually, or two or more types of solid electrolyte particles may be used in combination.

A crystalline inorganic ion conductor, an amorphous inorganic ion conductor, or a mixture thereof can be used as the inorganic solid electrolyte without any specific limitations. Moreover, in a case in which the all-solid-state secondary battery is an all-solid-state lithium ion secondary battery, for example, a crystalline inorganic lithium ion conductor, an amorphous inorganic lithium ion conductor, or a mixture thereof can normally be used as the inorganic solid electrolyte.

In particular, it is preferable that the inorganic solid electrolyte includes either or both of a sulfide inorganic solid electrolyte and an oxide inorganic solid electrolyte from a viewpoint of forming a functional layer having excellent ion conductivity and enhancing cycle characteristics of an all-solid-state secondary battery while also further reducing IV resistance of the all-solid-state secondary battery.

Although the following describes, as one example, a case in which the slurry composition for an all-solid-state secondary battery is a slurry composition for an all-solid-state lithium ion secondary battery, the presently disclosed slurry composition for an all-solid-state secondary battery is not limited to the following example.

Examples of crystalline inorganic lithium ion conductors include Li₃N, LISICON (Li₁₄Zn(GeO₄)₄), perovskite-type lithium ion conductors (for example, Li_{0.5}La_{0.5}TiO₃), garnet-type lithium ion conductors (for example, Li₇La₃Zr₂O₁₂), LIPON (Li_{3+y}PO₄₋ₓNₓ), Thio-LISICON (Li_{3.25}Ge_{0.25}P_{0.75}S₄), and argyrodite-type lithium ion conductors (for example, Li_{5.6}PS_{4.4}Cl_{1.8}).

The crystalline inorganic lithium ion conductors described above can be used individually or as a mixture of two or more types.

The amorphous inorganic lithium ion conductor may, for example, be a sulfur atom-containing substance that displays ion conductivity. More specific examples include glass Li-Si-S-O, Li-P-S, and an amorphous inorganic lithium ion conductor obtained using a raw material composition containing Li₂S and a sulfide of an element belonging to any one of groups 13 to 15 of the periodic table.

The element belonging to any one of groups 13 to 15 may be Al, Si, Ge, P, As, Sb, or the like, for example. Moreover, the sulfide of the element belonging to any one of groups 13 to 15 may, more specifically, be Al₂S₃, SiS₂, GeS₂, P₂S₃, P₂S₅, As₂S₃, Sb₂S₃, or the like. The method by which the amorphous inorganic lithium ion conductor is synthesized using the raw material composition may be an amorphization method such as mechanical milling or melt quenching, for example. The amorphous inorganic lithium ion conductor that is obtained using the raw material composition containing Li₂S and the sulfide of the element belonging to any one of groups 13 to 15 of the periodic table is preferably Li₂S-P₂S₅, Li₂S-SiS₂, Li₂S-GeS₂, or Li₂S-Al₂S₃, and more preferably Li₂S-P₂S₅.

The amorphous inorganic lithium ion conductors described above can be used individually or as a mixture of two or more types.

Of the examples described above, an amorphous sulfide containing Li and P or Li₇La₃Zr₂O₁₂ is preferable as a solid electrolyte for an all-solid-state lithium ion secondary battery from a viewpoint of forming a functional layer having even better ion conductivity. An amorphous sulfide containing Li and P and Li₇La₃Zr₂O₁₂ have high lithium ion conductivity, and thus enable further reduction of IV resistance of an all-solid-state secondary battery when used as an inorganic electrolyte.

The amorphous sulfide containing Li and P is more preferably sulfide glass formed of Li₂S and P₂S₅ from a viewpoint of further reducing IV resistance of an all-solid-state secondary battery, and is particularly preferably sulfide glass produced from a mixed raw material of Li₂S and P₂S₅ in which the molar ratio of Li₂S:P₂S₅ is 65:35 to 85:15. Moreover, the amorphous sulfide containing Li and P is preferably sulfide glass-ceramic that is obtained by reacting a mixed raw material of Li₂S and P₂S₅ in which the molar ratio of Li₂S:P₂S₅ is 65:35 to 85:15 by a mechanochemical method. The molar ratio of Li₂S:P₂S₅ in the mixed raw material is preferably 68:32 to 80:20 from a viewpoint of maintaining a state of high lithium ion conductivity.

Note that the inorganic solid electrolyte may contain one or more sulfides selected from the group consisting of Al₂S₃, B₂S₃, and SiS₂ as a starting material other than Li₂S and P₂S₅ to the extent that ion conductivity is not reduced. The addition of such a sulfide can stabilize a glass component in the inorganic solid electrolyte.

In the same manner, the inorganic solid electrolyte may contain one or more ortho-oxoacid lithium salts selected from the group consisting of Li₃PO₄, Li₄SiO₄, Li₄GeO₄, Li₃BO₃, and Li₃AlO₃, in addition to Li₂S and P₂S₅. The inclusion of such an ortho-oxoacid lithium salt can stabilize a glass component in the inorganic solid electrolyte.

The particle diameter of the solid electrolyte particles can be the same as that of conventionally used solid electrolyte particles without any specific limitations.

### <Conductive material particles>

Particles formed of a known conductive substance can be used as conductive material particles without any specific limitations. Note that the shape of the conductive material particles can be any shape such as a roughly spherical shape, a fibrous shape, or a plate-like shape without any specific limitations.

Examples of conductive material particles that can be used include conductive carbon materials such as carbon black (for example, acetylene black, Ketjenblack^{®} (Ketjenblack is a registered trademark in Japan, other countries, or both), and furnace black), single-walled and multi-walled carbon nanotubes (multi-walled carbon nanotubes are inclusive of cup-stacked carbon nanotubes), carbon nanohorns, vapor-grown carbon fiber, milled carbon fiber obtained through pyrolysis and subsequent pulverization of polymer fiber, single-layer and multi-layer graphene, and carbon non-woven fabric sheet obtained through pyrolysis of non-woven fabric formed of polymer fiber; and fibers and foils of various metals.

The conductive material particles described above can be used individually or as a mixture of two or more types.

Note that the size (particle diameter, fiber diameter, fiber length, etc.) of the conductive material particles described above can be the same as that of conventionally used conductive material particles without any specific limitations.

No specific limitations are placed on the quantitative ratio of the functional particles and the polymer X originating from the binder composition in the slurry composition.

For example, the amount of the polymer X that is contained in the slurry composition is preferably 0.1 parts by mass or more, more preferably 0.3 parts by mass or more, and even more preferably 0.5 parts by mass or more per 100 parts by mass of the amount of the functional particles (total amount in a case in which a plurality of types of functional particles are included), and is preferably 8 parts by mass or less, more preferably 6 parts by mass or less, even more preferably 4 parts by mass or less, and particularly preferably 3 parts by mass or less per 100 parts by mass of the amount of functional particles. When the amount of the polymer X is 0.1 parts by mass or more per 100 parts by mass of the functional particles, fluidity of the slurry composition can be ensured while also further improving adhesiveness of a functional layer. On the other hand, when the amount of the polymer X is 8 parts by mass or less per 100 parts by mass of the functional particles, IV resistance of an all-solid-state secondary battery can be further reduced while also improving cycle characteristics of the all-solid-state secondary battery.

### <Production method of slurry composition>

No specific limitations are placed on the method by which the presently disclosed slurry composition is produced. For example, the slurry composition can be produced by mixing the functional particles and the presently disclosed binder composition by a known mixing method.

In a case in which the presently disclosed slurry composition is a slurry composition for an electrode mixed material layer, for example, the presently disclosed slurry composition may be produced by mixing electrode active material particles and conductive material particles serving as functional particles with the presently disclosed binder composition, or may be produced by mixing conductive material particles serving as functional particles and the presently disclosed binder composition to produce a slurry composition (conductive material paste containing the conductive material particles and the binder composition) and subsequently mixing this conductive material paste and electrode active material particles serving as functional particles.

### (Functional layer for all-solid-state secondary battery)

The presently disclosed functional layer is a layer that contains functional particles and the polymer X as a binder. The functional layer may be a solid electrolyte layer, an electrode mixed material layer, an undercoat layer, or the like such as previously described.

Moreover, the presently disclosed functional layer is a layer that is formed using the presently disclosed slurry composition set forth above and can be produced by, for example, applying the slurry composition set forth above onto the surface of a suitable substrate to form a coating film, and subsequently drying the coating film that has been formed. In other words, the presently disclosed functional layer is formed of a dried product of the slurry composition set forth above, normally contains functional particles and a binder including the polymer X, and optionally further contains other components. Note that components contained in the functional layer are components that were contained in the slurry composition and that the content ratio of these components is normally the same as the content ratio thereof in the slurry composition.

The presently disclosed functional layer has excellent adhesiveness as a result of being formed using the presently disclosed slurry composition. Moreover, by using the presently disclosed functional layer, it is possible to produce an all-solid-state secondary battery having low IV resistance.

### <Substrate>

No limitations are placed on the substrate onto which the slurry composition is applied. For example, a coating film of the slurry composition may be formed on the surface of a releasable substrate, the coating film may be dried to form a functional layer, and then the releasable substrate may be peeled from the functional layer. The functional layer that has been peeled from the releasable substrate in this manner can be used as a free-standing film in formation of a battery member (for example, an electrode or a solid electrolyte layer) of an all-solid-state secondary battery.

On the other hand, a current collector or an electrode may be used as the substrate from a viewpoint of increasing battery member production efficiency through omission of a step of peeling the functional layer. For example, in a situation in which an electrode mixed material layer or an undercoat layer is to be produced, the slurry composition is preferably applied onto a current collector serving as a substrate. Note that in a situation in which an electrode mixed material layer is to be produced, a current collector having an undercoat layer provided on the surface thereof can be used as the substrate.

### «Releasable substrate»

A known releasable substrate such as imide film can be used as the releasable substrate without any specific limitations.

### <<Current collector>>

A material having electrical conductivity and electrochemical durability is used as the current collector. Specifically, the current collector may, for example, be made of iron, copper, aluminum, nickel, stainless steel, titanium, tantalum, gold, platinum, or the like. Of these materials, copper foil is particularly preferable as a current collector used for a negative electrode. On the other hand, aluminum foil is particularly preferable as a current collector used for a positive electrode. One of these materials may be used individually, or two or more of these materials may be used in combination in a freely selected ratio.

### «Electrode»

The electrode (positive electrode or negative electrode) is not specifically limited and may be an electrode that is obtained by forming an electrode mixed material layer containing electrode active material particles, solid electrolyte particles, and a binder on a current collector such as described above.

The electrode active material particles, solid electrolyte particles, and binder contained in the electrode mixed material layer of the electrode serving as the substrate are not specifically limited, and known examples thereof can be used. Note that the electrode mixed material layer of the electrode may be a layer that corresponds to the presently disclosed functional layer.

### <Formation method of functional layer>

Specific examples of methods by which the functional layer may be formed include:
(1) a method in which the presently disclosed slurry composition is applied onto the surface of a current collector or an electrode and is then dried;
(2) a method in which a current collector or an electrode is immersed in the presently disclosed slurry composition and is then dried; and
(3) a method in which the presently disclosed slurry composition is applied onto a releasable substrate and is dried to produce a functional layer that is then transferred onto the surface of an electrode.

Of these methods, methods (1) and (3) are particularly preferable since they allow simple control of the thickness of the functional layer.

### «Application»

Examples of methods by which the slurry composition may be applied onto the substrate include, but are not specifically limited to, doctor blading, reverse roll coating, direct roll coating, gravure coating, extrusion coating, and brush coating.

### <<Drying>>

The slurry composition on the substrate can be dried by any commonly known method without any specific limitations. Examples of drying methods that may be used include drying by warm, hot, or low-humidity air, drying in a vacuum, and drying by irradiation with infrared light, electron beams, or the like.

In a case in which the functional layer is an electrode mixed material layer, the electrode mixed material layer can be subjected to a pressing process by roll pressing or the like after drying. The pressing process enables further densification of the obtained electrode mixed material layer.

### <<Transfer>>

Any commonly known transfer method can be adopted without any specific limitations as the method by which the functional layer is transferred onto the surface of an electrode or the like in method (3).

### (Electrode)

An electrode that is obtained by forming an electrode mixed material layer on a current collector using a presently disclosed slurry composition for an electrode mixed material layer contains at least solid electrolyte particles, electrode active material particles, and the polymer X in the electrode mixed material layer. By using the electrode that includes an electrode mixed material layer serving as the presently disclosed functional layer, it is possible to produce an all-solid-state secondary battery having low IV resistance.

### (Solid electrolyte layer)

A solid electrolyte layer that is formed using a presently disclosed slurry composition for a solid electrolyte layer contains at least solid electrolyte particles and the polymer X and is disposed between a positive electrode and a negative electrode in an all-solid-state secondary battery. By using the solid electrolyte layer serving as the presently disclosed functional layer, it is possible to produce an all-solid-state secondary battery having low IV resistance.

Note that the solid electrolyte layer normally does not contain electrode active material particles and conductive material particles.

### (Undercoat layer)

An undercoat layer that is formed using a presently disclosed slurry composition for an undercoat layer contains at least conductive material particles and the polymer X and is disposed between an electrode mixed material layer and a current collector in an electrode. By using the electrode that includes the undercoat layer serving as the presently disclosed functional layer, it is possible to produce an all-solid-state secondary battery having low IV resistance.

Note that the undercoat layer normally does not contain electrode active material particles.

### (All-solid-state secondary battery)

The presently disclosed all-solid-state secondary battery includes the presently disclosed functional layer set forth above. The presently disclosed all-solid-state secondary battery may, for example, include a positive electrode, a solid electrolyte layer, and a negative electrode, wherein at least one of a positive electrode mixed material layer of the positive electrode, an undercoat layer of the positive electrode, a negative electrode mixed material layer of the negative electrode, an undercoat layer of the negative electrode, and the solid electrolyte layer is the presently disclosed functional layer.

The presently disclosed all-solid-state secondary battery has low IV resistance and excellent cell characteristics as a result of including the presently disclosed functional layer.

Note that from a viewpoint of further reducing IV resistance, it is preferable that in the presently disclosed all-solid-state secondary battery, each of the positive electrode mixed material layer of the positive electrode, the negative electrode mixed material layer of the negative electrode, and the solid electrolyte layer is the presently disclosed functional layer.

Any electrode for an all-solid-state secondary battery can be used in the presently disclosed all-solid-state secondary battery as an electrode for an all-solid-state secondary battery including an electrode mixed material layer and/or undercoat layer that does not correspond to the presently disclosed functional layer without any specific limitations so long as it includes an electrode mixed material layer and/or undercoat layer that does not correspond to the presently disclosed functional layer.

Moreover, any solid electrolyte layer such as a solid electrolyte layer described in JP2012-243476A, JP2013-143299A, JP2016-143614A, or the like can be used without any specific limitations in the presently disclosed all-solid-state secondary battery as a solid electrolyte layer that does not correspond to the presently disclosed functional layer.

The presently disclosed all-solid-state secondary battery can be produced by stacking the positive electrode and the negative electrode such that the positive electrode mixed material layer of the positive electrode and the negative electrode mixed material layer of the negative electrode are in opposition via the solid electrolyte layer, optionally performing pressing to obtain a laminate, subsequently placing the laminate in a battery container in that form or after rolling, folding, or the like in accordance with the battery shape, and then sealing the battery container. Note that an expanded metal, an overcurrent preventing device such as a fuse or a PTC device, a lead plate, or the like may be placed in the battery container as necessary in order to prevent pressure increase inside the battery and occurrence of overcharging or overdischarging. The shape of the battery may be a coin type, button type, sheet type, cylinder type, prismatic type, flat type, or the like.

### EXAMPLES

The following provides a more specific description of the present disclosure based on examples. However, the present disclosure is not limited to the following examples. In the following description, "%", "parts", and "ppm" used in expressing quantities are by mass, unless otherwise specified. Moreover, in the case of a polymer that is produced through copolymerization of a plurality of types of monomers, the proportion in the polymer constituted by a monomer unit that is formed through polymerization of a given monomer is normally, unless otherwise specified, the same as the ratio (charging ratio) of the given monomer among all monomers used in polymerization of the polymer.

In the examples and comparative examples, the following methods were used to measure or evaluate the molecular weight of a polymer, the fluidity of a slurry composition, the adhesiveness of an electrode mixed material layer, and the IV resistance and cycle characteristics of an all-solid-state secondary battery.

### <Molecular weight>

The weight-average molecular weight (Mw) and number-average molecular weight (Mn) of a polymer were measured by gel permeation chromatography (GPC) under the following measurement conditions using a LiBr-DMF (dimethylformamide) solution of 10 mM in concentration. The molecular weight distribution (Mw/Mn) was also calculated.
- Separation column: Shodex KD-806M (produced by Showa Denko K.K.)
- Detector: Differential refractometer RID-10A (produced by Shimadzu Corporation)
- Eluent flow rate: 0.3 mL/min
- Column temperature: 40°C
- Standard polymer: TSK standard polystyrene (produced by Tosoh Corporation)

### <Fluidity>

The viscosity of a slurry composition was measured by a Brookfield B-type viscometer (60 rpm, 25°C). A smaller value for viscosity (particularly a smaller value for viscosity at the same solid content concentration) indicates that the slurry composition has better fluidity.
A: Viscosity of less than 3,000 mPa·s
B: Viscosity of not less than 3,000 mPa·s and less than 5,000 mPa·s
C: Viscosity of not less than 5,000 mPa·s and less than 8,000 mPa-s
D: Viscosity of not less than 8,000 mPa·s or not dispersed (no fluidity, viscosity not measurable)

### <Adhesiveness>

### <<Positive electrode mixed material layer>>

A rectangle of 1.0 cm in width by 10 cm in length was cut out from a positive electrode as a test specimen. Cellophane tape (tape prescribed by JIS Z1522) was affixed to the surface at the positive electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates that the positive electrode mixed material layer has better adhesiveness and is closely adhered more strongly to a current collector.
A: Peel strength of 3 N/m or more
B: Peel strength of not less than 2 N/m and less than 3 N/m
C: Peel strength of not less than 1 N/m and less than 2 N/m
D: Peel strength of less than 1 N/m

### <<Negative electrode mixed material layer>>

A rectangle of 1.0 cm in width by 10 cm in length was cut out from a negative electrode as a test specimen. Cellophane tape (tape prescribed by JIS Z1522) was affixed to the surface at the negative electrode mixed material layer-side of the test specimen, the cellophane tape was subsequently peeled off in a direction at 180° from one end of the test specimen at a speed of 50 mm/min, and the stress during this peeling was measured. A total of three measurements were made in this manner. An average value of these measurements was determined, was taken to be the peel strength (N/m), and was evaluated by the following standard. A larger peel strength indicates that the negative electrode mixed material layer has better adhesiveness and is closely adhered more strongly to a current collector.
A: Peel strength of 4 N/m or more
B: Peel strength of not less than 3 N/m and less than 4 N/m
C: Peel strength of not less than 2 N/m and less than 3 N/m
D: Peel strength of less than 2 N/m

### <IV resistance>

An all-solid-state secondary battery was charged to an SOC (State Of Charge) of 50% at 1C (C is a value expressed by rated capacity (mA)/1 h (hours)) in a 25°C atmosphere. The all-solid-state secondary battery was subsequently subjected to 30 seconds of charging and 30 seconds of discharging at each of 0.1C, 0.2C, 0.5C, 1C, and 2C centered on an SOC of 50%. The battery voltage after 10 seconds at the discharging side was plotted against the current value, and the gradient of this plot was determined as the IV resistance (Ω) (IV resistance during discharging). The obtained IV resistance value (Ω) was evaluated by the following standard. A smaller value for IV resistance indicates that the all-solid-state secondary battery has lower internal resistance.
A: IV resistance of 80 Ω or less
B: IV resistance of more than 80 Ω and not more than 90 Ω
C: IV resistance of more than 90 Ω and not more than 100 Ω
D: IV resistance of more than 100 Ω

### <Cycle characteristics>

An all-solid-state secondary battery was subjected to 50 charge/discharge cycles at 25°C in which the all-solid-state secondary battery was charged from 3 V to 4.2 V at 0.2C and then discharged from 4.2 V to 3 V at 0.2C. A value determined by calculating the 0.2C discharge capacity of the 50^{th} cycle as a percentage relative to the 0.2C discharge capacity of the 1^{st} cycle was taken to be a capacity maintenance rate and was evaluated by the following standard. A larger value for the capacity maintenance rate indicates that there is less reduction of discharge capacity and that the all-solid-state secondary battery has better cycle characteristics.
A: Capacity maintenance rate of 90% or more
B: Capacity maintenance rate of not less than 80% and less than 90%
C: Capacity maintenance rate of not less than 70% and less than 80%
D: Capacity maintenance rate of less than 70%

### (Example 1)

### <Production of binder composition containing polymer X>

A 1 L septum-equipped flask (reactor) that included a stirrer was charged with 90 parts of deionized water and 0.5 parts of sodium lauryl sulfate as an emulsifier. The gas phase was purged with nitrogen gas, the temperature was raised to 60°C, and then 0.3 parts of ammonium persulfate (APS) as a polymerization initiator was dissolved in 20.0 parts of deionized water and was added into the flask.

Meanwhile, a monomer composition was obtained in a separate vessel (emulsion vessel) by mixing 30 parts of deionized water, 0.5 parts of sodium lauryl sulfate as an emulsifier, and, as monomers, 2.5 parts of p-styrene sulfonic acid as a monomer a, 70.5 parts of n-butyl acrylate and 22.0 parts of ethyl acrylate as (meth)acrylic acid ester monomers, and 5.0 parts of acrylonitrile as a nitrile group-containing monomer. The monomer composition was continuously added into the 1 L septum-equipped flask over 3 hours to perform polymerization. The reaction was carried out at 60°C during addition. Once the addition was complete, a further 2 hours of stirring was performed at 80°C to yield a water dispersion of a polymer X.

Next, an appropriate amount of butyl butyrate was added to the obtained water dispersion of the polymer X so as to obtain a mixture. Thereafter, distillation was performed under reduced pressure at 80°C to remove water and excess butyl butyrate from the mixture, and thereby obtain a binder composition (solid content concentration: 10%).

### <Production of slurry composition for positive electrode mixed material layer>

After mixing 70 parts of lithium cobalt oxide (number-average particle diameter: 11.5 µm) as positive electrode active material particles, 26.7 parts of sulfide glass formed of Li₂S and P₂S₅ (Li₂S/P₂S₅ = 70 mol%/30 mol%; number-average particle diameter: 0.9 µm) as solid electrolyte particles, 2.5 parts of acetylene black as conductive material particles, and 0.8 parts (in terms of solid content of polymer X) of the binder composition obtained as described above and then further adding butyl butyrate as a solvent so as to adjust the solid content concentration to 80%, these materials were mixed for 60 minutes in a planetary mixer. Butyl butyrate was subsequently further added so as to adjust the solid content concentration to 65%, and then 10 minutes of mixing was performed to produce a slurry composition for a positive electrode mixed material layer. Fluidity was evaluated for this slurry composition for a positive electrode mixed material layer. The result is shown in Table 1.

### <Production of slurry composition for negative electrode mixed material layer>

After mixing 65 parts of graphite (number-average particle diameter: 20 µm) as negative electrode active material particles, 32 parts of sulfide glass formed of Li₂S and P₂S₅ (Li₂S/P₂S₅ = 70 mol%/30 mol%; number-average particle diameter: 0.9 µm) as solid electrolyte particles, 1.5 parts of acetylene black as conductive material particles, and 1.5 parts (in terms of solid content of polymer X) of the binder composition obtained as described above and then further adding butyl butyrate as a solvent so as to adjust the solid content concentration to 65%, these materials were mixed for 60 minutes in a planetary mixer. Butyl butyrate was subsequently further added so as to adjust the solid content concentration to 60%, and then mixing was performed in the planetary mixer to produce a slurry composition for a negative electrode mixed material layer. Fluidity was evaluated for this slurry composition for a negative electrode mixed material layer. The result is shown in Table 1.

### <Production of slurry composition for solid electrolyte layer>

After mixing 100 parts of sulfide glass formed of Li₂S and P₂S₅ (Li₂S/P₂S₅ = 70 mol%/30 mol%; number-average particle diameter: 0.9 µm) as solid electrolyte particles and 1.0 parts (in terms of solid content of polymer X) of the binder composition obtained as described above in a glovebox under an argon gas atmosphere (moisture concentration: 0.6 ppm; oxygen concentration: 1.8 ppm) and then further adding butyl butyrate as a solvent so as to adjust the solid content concentration to 65%, these materials were mixed for 60 minutes in a planetary mixer. Butyl butyrate was subsequently further added so as to adjust the solid content concentration to 55%, and then mixing was performed in the planetary mixer to produce a slurry composition for a solid electrolyte layer. Fluidity was evaluated for this slurry composition for a solid electrolyte layer. The result is shown in Table 1.

### <Production of positive electrode>

The slurry composition for a positive electrode mixed material layer was applied onto the surface of a current collector (aluminum foil; thickness: 20 µm) and was dried (60 minutes at temperature of 120°C) so as to form a positive electrode mixed material layer of 75 µm in thickness, and thereby obtain a positive electrode. This positive electrode was used to evaluate adhesiveness of the positive electrode mixed material layer. The result is shown in Table 1.

### <Production of negative electrode>

The slurry composition for a negative electrode mixed material layer was applied onto the surface of a current collector (copper foil; thickness: 15 µm) and was dried (60 minutes at temperature of 120°C) to form a negative electrode mixed material layer of 90 µm in thickness, and thereby obtain a negative electrode. This negative electrode was used to evaluate adhesiveness of the negative electrode mixed material layer. The result is shown in Table 1.

### <Production of all-solid-state secondary battery>

Next, the slurry composition for a solid electrolyte layer was applied onto imide film (thickness: 25 µm) and was dried (60 minutes at temperature of 120°C) to form a solid electrolyte layer of 150 µm in thickness. The solid electrolyte layer on the imide film and the positive electrode were affixed with the solid electrolyte layer and the positive electrode mixed material layer in contact with each other, a pressing process was performed such that 400 MPa of pressure (pressing pressure) was applied, and the solid electrolyte layer was transferred onto the positive electrode mixed material layer from the imide film to thereby obtain a solid electrolyte layer-equipped positive electrode.

The solid electrolyte layer-equipped positive electrode and the negative electrode were affixed with the solid electrolyte layer of the solid electrolyte layer-equipped positive electrode and the negative electrode mixed material layer of the negative electrode in contact with each other, and a pressing process was performed such that 400 MPa of pressure (pressing pressure) was applied to the solid electrolyte layer of the solid electrolyte layer-equipped positive electrode to thereby obtain an all-solid-state secondary battery. The thickness of the solid electrolyte layer in the all-solid-state secondary battery after pressing was 120 µm. IV resistance and cycle characteristics were evaluated for this all-solid-state secondary battery. The results are shown in Table 1.

### (Examples 2 to 10)

A polymer X having a chemical composition recorded in Table 1 or 2 was produced by changing the types and/or amounts of used monomers. Moreover, a binder composition, slurry compositions, electrodes, and an all-solid-state secondary battery were produced and various evaluations were performed in the same way as in Example 1. The results are shown in Table 1 or 2.

### (Examples 11 to 14)

A polymer X, a binder composition, slurry compositions, electrodes, and an all-solid-state secondary battery were produced and various evaluations were performed in the same way as in Example 2 with the exception that xylene (Example 11), anisole (Example 12), isobutyl isobutyrate (Example 13), or diisobutyl ketone (Example 14) was used instead of butyl butyrate as a solvent in production of the binder composition containing the polymer X and also the slurry composition for a positive electrode mixed material layer, the slurry composition for a negative electrode mixed material layer, and the slurry composition for a solid electrolyte layer. The results are shown in Table 2.

### (Comparative Examples 1 to 4)

A polymer having a chemical composition recorded in Table 3 was produced by changing the types and/or amounts of used monomers. Moreover, a binder composition, slurry compositions, electrodes, and an all-solid-state secondary battery were produced and various evaluations were performed in the same way as in Example 1 with the exception that this polymer was used instead of the polymer X. The results are shown in Table 3.

### (Comparative Example 5)

A water dispersion of a polymer X was produced in the same way as in Example 1. Slurry compositions, electrodes, and an all-solid-state secondary battery were produced and various evaluations were performed in the same way as in Example 1 with the exception that this water dispersion of the polymer X was used as a binder composition and that water was used instead of butyl butyrate as a solvent. The results are shown in Table 3.

### (Comparative Example 6)

A polymer X, a binder composition, slurry compositions, electrodes, and an all-solid-state secondary battery were produced and various evaluations were performed in the same way as in Example 1 with the exception that N-methyl-2-pyrrolidone (carbon number: 5) was used instead of butyl butyrate as a solvent in production of the binder composition containing the polymer X and also the slurry composition for a positive electrode mixed material layer, the slurry composition for a negative electrode mixed material layer, and the slurry composition for a solid electrolyte layer. The results are shown in Table 3.

In Tables 1 to 3, shown below:
"PSA" indicates p-styrene sulfonic acid unit;
"4VA" indicates 4-vinylbenzoic acid unit;
"3VA" indicates 3-vinylaniline unit;
"AMPS" indicates 2-acrylamido-2-methylpropane sulfonic acid unit;
"AN" indicates acrylonitrile unit;
"BA" indicates n-butyl acrylate unit;
"EA" indicates ethyl acrylate unit;
"2EHA" indicates 2-ethylhexyl acrylate unit;
"St" indicates styrene unit;
"Sulfo" indicates sulfo group;
"Carboxy" indicates carboxy group;
"Amino" indicates amino group;
"DIBK" indicates diisobutyl ketone;
"NMP" indicates N-methyl-2-pyrrolidone;
"Positive" indicates slurry composition for positive electrode mixed material layer or positive electrode;
"Negative" indicates slurry composition for negative electrode mixed material layer or negative electrode; and
"Solid" indicates slurry composition for solid electrolyte layer.

**[Table 1]**

| | | | Example 1 | Example 2 | Example 3 | Example 4 | Example 5 | Example 6 | Example 7 |
|---|---|---|---|---|---|---|---|---|---|
| Polymer | Monomer unit A, etc. | Type | PSA | PSA | PSA | 4VA | 3VA | PSA | PSA |
| | | Functional group | Sulfo | Sulfo | Sulfo | Carboxy | Amino | Sulfo | Sulfo |
| | | Proportion [mass%] | 2.5 | 2.5 | 1.5 | 2.5 | 2.5 | 2.5 | 2.5 |
| | Nitrile group-containing monomer unit | Type | AN | AN | AN | AN | AN | AN | AN |
| | | Proportion [mass%] | 5.0 | 12.0 | 12.0 | 5.0 | 5.0 | 4.0 | 20.0 |
| | (Meth)acrylic acid ester monomer unit | Type | BA | BA | BA | BA | BA | BA | BA |
| | | Proportion [mass%] | 70.5 | 60.0 | 57.0 | 70.5 | 70.5 | 70.5 | 62.5 |
| | | Type | EA | EA | EA | EA | EA | EA | EA |
| | | Proportion [mass%] | 22.0 | 15.5 | 19.5 | 22.0 | 22.0 | 23.0 | 15.0 |
| | Other repeating unit | Type | - | St | St | - | - | - | - |
| | | Proportion [mass%] | - | 10.0 | 10.0 | - | - | - | - |
| | Mw/Mn [-] | | 3.5 | 3.5 | 3.5 | 3.4 | 3.6 | 3.5 | 3.4 |
| | Mw [-] | | 1200000 | 1200000 | 1200000 | 1000000 | 900000 | 1300000 | 1400000 |
| Solvent | | | Butyl butyrate | Butyl butyrate | Butyl butyrate | Butyl butyrate | Butyl butyrate | Butyl butyrate | Butyl butyrate |
| Fluidity | | Positive | A | A | A | A | A | B | B |
| | | Negative | A | A | A | A | A | B | B |
| | | Solid | A | A | A | A | A | B | B |
| Adhesiveness | | Positive | A | A | A | B | A | A | A |
| | | Negative | A | A | A | B | A | A | A |
| IV resistance | | | A | A | A | A | A | B | B |
| Cycle characteristics | | | A | A | A | B | A | A | A |

**[Table 2]**

| | | | Example 8 | Example 9 | Example 10 | Example 11 | Example 12 | Example 13 | Example 14 |
|---|---|---|---|---|---|---|---|---|---|
| Polymer | Monomer unit A, etc. | Type | PSA | PSA | PSA | PSA | PSA | PSA | PSA |
| | | Functional group | Sulfo | Sulfo | Sulfo | Sulfo | Sulfo | Sulfo | Sulfo |
| | | Proportion [mass%] | 0.7 | 3.0 | 2.5 | 2.5 | 2.5 | 2.5 | 2.5 |
| | Nitrile group-containing monomer unit | Type | AN | AN | AN | AN | AN | AN | AN |
| | | Proportion [mass%] | 5.0 | 5.0 | 12.0 | 12.0 | 12.0 | 12.0 | 12.0 |
| | (Meth)acrylic acid ester monomer unit | Type | BA | BA | 2EHA | BA | BA | BA | BA |
| | | Proportion [mass%] | 68.0 | 68.0 | 75.5 | 60.0 | 60.0 | 60.0 | 60.0 |
| | | Type | EA | EA | - | EA | EA | EA | EA |
| | | Proportion [mass%] | 26.3 | 24.0 | - | 15.5 | 15.5 | 15.5 | 15.5 |
| | Other repeating unit | Type | - | - | St | St | St | St | St |
| | | Proportion [mass%] | - | - | 10.0 | 10.0 | 10.0 | 10.0 | 10.0 |
| | Mw/Mn [-] | | 3.3 | 3.5 | 3.7 | 3.5 | 3.5 | 3.5 | 3.5 |
| | Mw [-] | | 1100000 | 1100000 | 800000 | 1200000 | 1200000 | 1200000 | 1200000 |
| Solvent | | | Butyl butyrate | Butyl butyrate | Butyl butyrate | Xylene | Anisole | Isobutyl isobutyrate | DIBK |
| Fluidity | | Positive | A | A | A | A | B | A | A |
| | | Negative | A | A | A | A | B | A | A |
| | | Solid | A | A | A | A | B | A | A |
| Adhesiveness | | Positive | B | A | A | A | B | A | A |
| | | Negative | B | A | A | A | B | A | A |
| IV resistance | | | A | B | A | B | B | A | A |
| Cycle characteristics | | | B | B | A | A | B | A | A |

**[Table 3]**

| | | | Comparative Example 1 | Comparative Example 2 | Comparative Example 3 | Comparative Example 4 | Comparative Example 5 | Comparative Example 6 |
|---|---|---|---|---|---|---|---|---|
| Polymer | Monomer unit A, etc. | Type | PSA | PSA | AMPS | AMPS | PSA | PSA |
| | | Functional group | Sulfo | Sulfo | Sulfo | Sulfo | Sulfo | Sulfo |
| | | Proportion [mass%] | 5.0 | 0.3 | 2.5 | 2.5 | 2.5 | 2.5 |
| | Nitrile group-containing monomer unit | Type | AN | AN | AN | AN | AN | AN |
| | | Proportion [mass%] | 5.0 | 10.0 | 5.0 | 5.0 | 5.0 | 5.0 |
| | (Meth)acrylic acid ester monomer unit | Type | BA | BA | BA | BA | BA | BA |
| | | Proportion [mass%] | 68.0 | 68.0 | 70.5 | 60.5 | 70.5 | 70.5 |
| | | Type | EA | EA | EA | EA | EA | EA |
| | | Proportion [mass%] | 22.0 | 21.7 | 22.0 | 22.0 | 22.0 | 22.0 |
| | Other repeating unit | Type | - | - | - | St | - | - |
| | | Proportion [mass%] | - | - | - | 10.0 | - | - |
| | Mw/Mn [-] | | 3.6 | 3.6 | 3.5 | 3.5 | 3.5 | 3.5 |
| | Mw [-] | | 1100000 | 1100000 | 1400000 | 1400000 | 1200000 | 1200000 |
| Solvent | | | Butyl butyrate | Butyl butyrate | Butyl butyrate | Butyl butyrate | Water | NMP |
| Fluidity | | Positive | C | C | C | C | D | C |
| | | Negative | C | C | C | C | D | C |
| | | Solid | C | C | C | C | D | C |
| Adhesiveness | | Positive | D | D | D | D | D | C |
| | | Negative | D | D | D | D | D | C |
| IV resistance | | | C | D | C | C | D | D |
| Cycle characteristics | | | D | D | D | D | D | D |

It can be seen from Tables 1 and 2 that it is possible to produce a functional layer (positive electrode mixed material layer and negative electrode mixed material layer) having excellent adhesiveness and an all-solid-state secondary battery having low IV resistance through the binder compositions of Examples 1 to 14. It can also be seen that it is possible to produce a slurry composition having excellent fluidity and an all-solid-state secondary battery having excellent cycle characteristics through the binder compositions of Examples 1 to 14.

In contrast, it can be seen from Table 3 that fluidity of a slurry composition, adhesiveness of a functional layer, and cycle characteristics of an all-solid-state secondary battery deteriorate and that IV resistance of an all-solid-state secondary battery increases in Comparative Examples 1 and 2 in which the proportional content of a monomer unit A in a polymer is outside of a specific range, Comparative Examples 3 and 4 in which a polymer is produced without using a monomer a, and Comparative Examples 5 and 6 in which a binder composition is produced without using an organic solvent having a carbon number of 6 or more as a solvent.

### INDUSTRIAL APPLICABILITY

According to the present disclosure, it is possible to provide a binder composition for an all-solid-state secondary battery and a slurry composition for an all-solid-state secondary battery that are capable of producing a functional layer having excellent adhesiveness and an all-solid-state secondary battery having low IV resistance.

Moreover, according to the present disclosure, it is possible to provide a functional layer having excellent adhesiveness and an all-solid-state secondary battery having low IV resistance.

## Claims

1. A binder composition for an all-solid-state secondary battery comprising: a binder; and an organic solvent having a carbon number of 6 or more, wherein
the binder includes a polymer X,
the polymer X includes a monomer unit A that includes an aromatic hydrocarbon ring and a functional group bonded directly or indirectly to the aromatic hydrocarbon ring,
the functional group is one or more selected from the group consisting of a sulfo group, a carboxy group, and an amino group, and
proportional content of the monomer unit A in the polymer X is not less than 0.5 mass% and not more than 3.0 mass% when all repeating units included in the polymer X are taken to be 100 mass%.

2. The binder composition for an all-solid-state secondary battery according to claim 1, wherein the polymer X further includes a nitrile group-containing monomer unit, and proportional content of the nitrile group-containing monomer unit in the polymer X is not less than 3.0 mass% and not more than 25.0 mass% when all repeating units included in the polymer X are taken to be 100 mass%.

3. The binder composition for an all-solid-state secondary battery according to claim 1, wherein the polymer X further includes a (meth)acrylic acid ester monomer unit, and proportional content of the (meth)acrylic acid ester monomer unit in the polymer X is not less than 35.0 mass% and not more than 95.0 mass% when all repeating units included in the polymer X are taken to be 100 mass%.

4. The binder composition for an all-solid-state secondary battery according to claim 1, wherein the organic solvent having a carbon number of 6 or more includes one or more selected from the group consisting of an aromatic hydrocarbon, a ketone, an ester, and an ether.

5. A slurry composition for an all-solid-state secondary battery comprising: functional particles; and the binder composition for an all-solid-state secondary battery according to claim 1.

6. The slurry composition for an all-solid-state secondary battery according to claim 5, wherein the functional particles are one or more selected from the group consisting of electrode active material particles, solid electrolyte particles, and conductive material particles.

7. A functional layer for an all-solid-state secondary battery formed using the slurry composition for an all-solid-state secondary battery according to claim 5 or 6.

8. An all-solid-state secondary battery comprising the functional layer for an all-solid-state secondary battery according to claim 7.
